# EUROPEAN PATENT SPECIFICATION

(11) **EP 2 254 789 B1**
(45) Date of publication and mention of the grant of the patent: **17.10.2012**
(21) Application number: 09719808.9
(22) Date of filing: 12.03.2009
(51) Int. Cl.: B64C 1/14

(54) **AIRCRAFT OPENING PANEL, IN PARTICULAR AN AIRPLANE CABIN DOOR**
LUKE FÜR EIN FLUGZEUG, INSBESONDERE EINE KABINENTÜR
TRAPPE POUR AVION, EN PARTICULIER PORTE DE CABINE D'AVION

(30) Priority: 14.03.2008 FR 0801386; 14.04.2008 US 44519
(43) Date of publication of application: 01.12.2010
(73) Proprietor: LATECOERE, 31500 Toulouse (FR)
(72) Inventor: TEXCIER, Roland, F-31850 Montrabe (FR); PERRIER, Christophe, F-31000 Toulouse (FR); OTHOMENE, Renaud, F-31500 Toulouse (FR)
(74) Representative: Junca, Eric
(86) International application number: PCT/IB2009/000504
(87) International publication number: WO 2009/112936

(56) References cited:
- WO-A-2007/062641
- US-A- 4 720 065
- US-A1- 2007 007 390
- US-A1- 2007 095 985
- US-B1- 6 378 806

## Description

The present invention relates to an aircraft opening panel, especially an airplane cabin door.

An airplane cabin door comprises, along its lateral sides, retainers, commonly called "stops", which are intended to engage, in the closure position of the door, with corresponding retainers or stops located on the frame structure of this door. The reciprocal engagement of these respective stops upon closing the door ensures that the door is held in place so as to be able to withstand the stresses said door experiences during the flight of the airplane, especially those exerted by the cabin pressurization. Specifically, the forces due to the pressurization are transferred via the stops of the door to the frame structure of this door.

Existing doors are generally produced by assembling aluminum parts, and said stops are fastened to them by means of fasteners, especially by bolts. Such a door is known from US 6 378 806, which shows all the features of the preamble of claim 1.

These fasteners must be designed to keep the stops in position and to withstand the large forces due to the pressurization.

In addition, fitting the stops involves carrying out specific machining operations at suitable points on the longerons and/or on the cross beams that the doors comprise, and also involves fastening counter-plates or other reinforcing or force-distributing parts.

These doors have the drawback of being relatively difficult to produce, owing to the large number of operations involved in fitting said stops.

In addition, the stops normally used have a tendency to warp under the effect of the pressurization.

Moreover, the trend in materials technology is to produce panels made of composite material, so as to lighten these panels and make them easier to produce.

The aim of the present invention is to remedy the drawbacks of the existing opening panels.

The main objective of the invention is therefore to provide an aircraft opening panel, especially an airplane cabin door, of easier manufacture as regards the fitting of said stops.

The aim of the invention is also to provide a solution for fastening the stops to the door that enable the forces due to pressurization to be withstood, while limiting the risks of rupture or warping.

Another objective of the invention is to provide such a panel, which can be produced entirely or partly of composite material.

The panel in question comprises, in a manner known per se, a plurality of retainers along its lateral sides, these being intended to engage, in the closure position of the panel, with corresponding retainers located on the frame structure of this panel.

According to the invention, as defined by the features of claim 1:
- the panel comprises at least one beam, a longitudinal end portion of which has a slot emerging in the end face of the beam and located at a suitable position for mounting a retainer directly on this beam;
- said retainer comprises a retaining part and a mounting part formed by a base, said mounting part forming one body with said retaining part;
- said mounting part and said slot being shaped in such a way that the mounting part engages tightly in said slot and that said mounting part is fastened to the beam by means of fasteners, particularly nuts and bolts, which are positioned approximately perpendicular to the principal direction of the beam.

The invention thus consists in producing a beam having at least one end portion which is shaped so as to accommodate directly a mounting part integral with a retainer, with tight engagement of this end portion with this mounting part, said end portion being placed on the panel at a suitable point for it to be mounted directly.

The panel according to the invention thus makes it possible for said retainer to be mounted directly on said end portion of the beam, and therefore in a relatively simple and easily implementable manner. Consequently, it is possible to dispense with the numerous operations needed, according to the prior art, to mount a retainer or stop on an airplane cabin door structure or similar panel.

In addition, the presence of said slot in the beam, into which said mounting part of the retainer is inserted, enables the forces undergone by the stop to be transferred directly into the core of the beam.

Moreover, the fasteners are perpendicular to the axis of the beam and not parallel, as is usually the case described in the prior art. The fasteners therefore do not work in tension but in shear and the stops no longer have a tendency to warp, unlike in the case of stops fastened to the beam along a direction parallel to the axis of the latter.

Preferably, the panel comprises at least one beam, the two longitudinal end portions of which each have a slot emerging in the end face of the corresponding longitudinal end portion, said slots being located at the respective places suitable for mounting two retainers directly on these end portions, on two opposed sides of the panel.

Thus, any one beam comprises two retainers, along two opposed sides of the panel.

Advantageously, said beam extends in a single piece between said opposed sides of the panel.

Furthermore, advantageously and according to the invention, the panel comprises at least one longeron.

Advantageously, the panel comprises several beams, the number of which enables all of the retainers that the panel comprises to be mounted.

Preferably, said beam has a greater width and/or a greater thickness, and/or has walls of greater thickness, in said end portion intended to accommodate a retainer, so as to have greater strength.

In particular, the beam may have, between a central portion of this beam and said end portion, an intermediate portion in which the width and/or the thickness of the beam progressively increase/increases and/or in which the thickness of the walls of the beam is increased relative to the thickness of the walls of this beam in said central portion.

This shaping makes it possible for the forces that said end portion may experience to be widely distributed.

According to a preferred embodiment of the invention, the beam progressively widens in said intermediate portion in such a way that it thus has a shape flared toward its end portion.

Advantageously, the beam is made of a molded material, especially of composite material comprising plies of fibers embedded in a resin.

Thus, the beam can be easily produced.

Preferably, in this case, the beam comprises, in said intermediate portion, stitching joining the fiber plies to one another.

These stitches reinforce the joining of the plies together and therefore increase the strength of the beam in said intermediate portion.

Moreover, the number of plies may be increased in said end portion, for the same purpose of increasing the strength of the beam at this point.

Advantageously, at least one longeron is made in several portions, said portions of said longeron being formed from plies stitched to the plies intended to form the beams, and are molded with these beams, in such a way that they are perfectly integral with the latter.

According to a preferred embodiment of the invention the beam comprises:
- two longitudinal section members having a C-shaped cross section, intermediate portions of which are slightly angled on that side of the section member along which the upper and lower branches of the "C" formed by the cross section of this section member extend, these section members being placed back-to-back in such a way that they give the beam an I-shaped cross section and that their intermediate portions and their end portions define elongate spaces between them; and
- inserts, which are placed between these section members, in said elongate spaces.

The invention will be clearly understood, and other features and advantages thereof will become apparent, with reference to the appended schematic drawing, which shows, by way of nonlimiting example, a preferred embodiment of the aircraft opening panel to which it relates, in which:
- figure 1 is a perspective view, this panel being an airplane cabin door;
- figure 2 is a top view of a transverse beam of the structure of this door;
- figures 3 and 4 are cross-sectional views of the beam along the lines III-III and IV-IV of figure 2, respectively; and
- figures 5 and 6 are detailed views, on a larger scale, of parts of the door, respectively before and after a retainer of this door has been mounted.

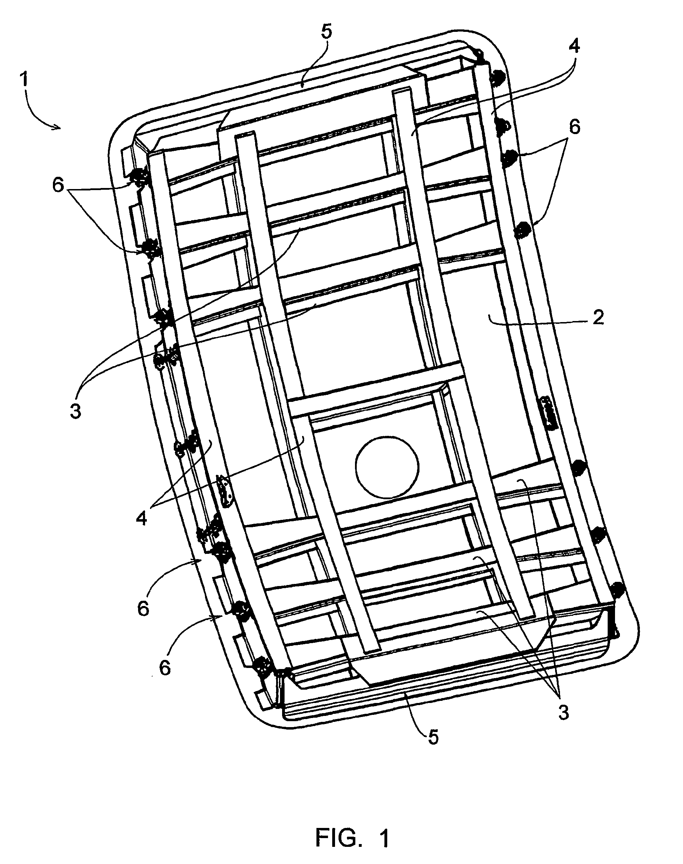

Figure 1 shows an airplane cabin door 1 comprising a panel 2, transverse beams 3 and longerons 4 forming a structure for reinforcing the panel 2, and upper and lower transverse closure flanges 5 placed at the ends of the longerons 4. The door 1 also includes seals and seal supports (not shown) known per se.

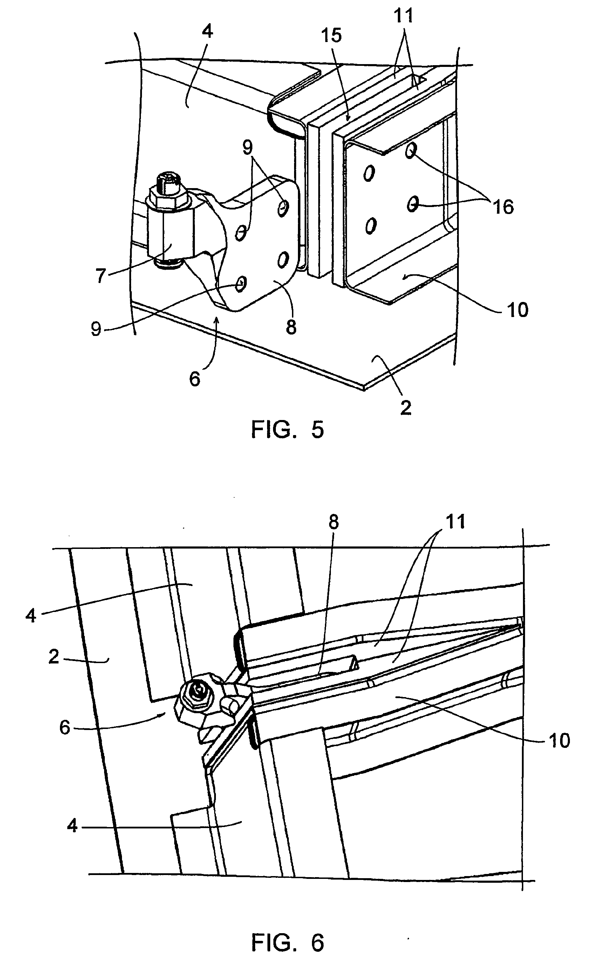

The door 1 also includes retainers 6, commonly called "stops", which are intended to engage, in the closed position of the door 1, with corresponding retainers or stops located on the frame structure (not shown) of this door. One of the retainers 6 is more particularly visible in figures 5 and 6. Each retainer 6 comprises a retaining part 7, known per se and therefore not specifically described, and a base 8 drilled with four holes 9, which forms one body with the retaining part 7. The retainer 6, and likewise the bolts intended to be engaged in the holes 9, as will be described later, may particularly be made of titanium.

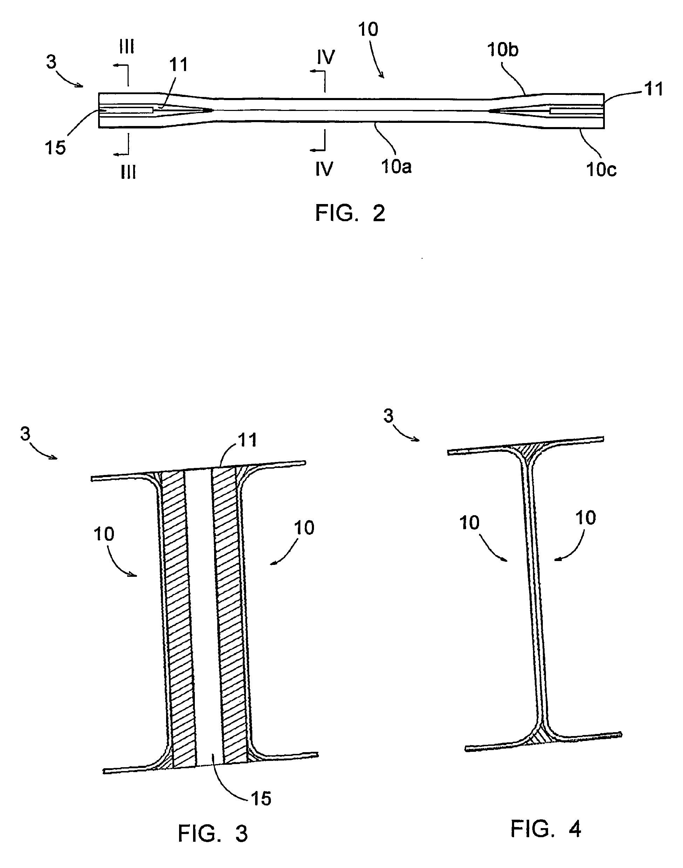

Figures 2 to 4, and also figures 5 and 6, show more particularly a transverse beam 3. As is apparent, the beam 3 comprises two longitudinal section members 10 of C-shaped cross section and inserts 11 fitted between these section members 10, in end and intermediate portions thereof.

Each section member 10 comprises a central portion 10a, two intermediate portions 10b and two end portions 10c. The intermediate portions 10b are slightly angled on that side of the section member 10 along which the upper and lower branches of the "C" formed by the cross section of the section member extend, and the end portions 10c are slightly angled relative to the intermediate portions 10b so as to be approximately parallel to the central portion 10a.

To form the beam 3, the two section members 10 are placed back-to-back (i.e. in such a way that the upper and lower branches of these section members project in opposite directions), with the central branches of the section members coming into the immediate proximity of each other in the central portions 10a. Thus, these section members 10 give the beam 3 an I-shaped cross section, and the intermediate portions 10b and end portions 10c form flared portions of the beam 3 and define between them elongate spaces into which the inserts 11 are placed.

Each insert 11 has on the outside a shape such that it entirely fills one of these elongate spaces and includes a stop 15 emerging in the end face of the beam 3, this stop 15 being designed for tightly holding the base 8 of a retainer 6.

The beam 3 is also drilled with four holes 16, which are approximately perpendicular to the principal direction of the beam, in this slot 15, these holes 16 being arranged in such a way that the holes 9 in the base 8 are coincident with them in the mounting position of the base 8 in the slot 15. These various transverse holes 9, 16 receive the aforementioned assembly bolts.

The section members 10 and the inserts 11 may especially be made of composite material. The inserts 11 may comprise a plurality of resin-impregnated fiber plies molded so as to form the slot 15 by molding. The various plies of these inserts 11 may be stitched together by transverse reinforcing threads 17, especially Kevlar ® or carbon threads.

It should be noted that, thanks to the retainers 6 being mounted on the end of the beams 3, the entire door 1, with the exception of these retainers 6, can be made of composite materials, by stitching the various fiber plies together, placing these plies in a mold and applying a curable resin, for example using an RTM (resin transfer molding) process.

Figures 1, 5 and 6 show that the beams 3 extend as a single piece over the entire width of the door 1 and that their slots 15 emerge on the outside of the outer longerons 4, being located slightly set back from the edges of the panel 2. Thus, the slots 15 are located at suitable positions for mounting the retainers 6 directly on the beams 3.

The longerons 4 are therefore interrupted at each transverse beam 3, and are therefore in several portions. When the entire structure of the door 1 is made of composite material, as indicated above, these portions of longerons 4 are formed from plies, optionally stitched to the plies intended to form the beams 3, and are molded with these beams 3 so that they are perfectly integral therewith.

As is apparent from the foregoing, the invention thus provides an aircraft opening panel, especially an airplane cabin door, affording the key advantages of easier manufacture as regards the fitting of the stops 6 and the ability to be completely or partly made of composite material.

The invention has been described above with reference to a preferred embodiment given by way of example. It goes without saying that the invention is not limited to this embodiment, rather it extends to all the other embodiments covered by the claims appended herewith.

## Claims

1. An aircraft opening panel, especially an airplane cabin door (1), comprising a plurality of retainers (6) along its lateral sides, these being intended to engage, in the closure position of the panel, with corresponding retainers located on the frame structure of this panel; the panel comprises at least one beam (3), located at a suitable position for mounting a retainer (6) directly on this beam (3) and each retainer (6) comprising a retaining part (7) and a mounting part (8) formed by a base;
**characterized in that**:
- a longitudinal end portion of said beam (3) has a slot (15) emerging in the end face thereof;
- said mounting part (8) forming one body with said retaining part (7);
- said mounting part (8) and said slot (15) being shaped in such a way that the mounting part (8) engages tightly in said slot (15), so as to enable the forces undergone by the stop to be transferred directly into the core of the beam, and
- said mounting part is fastened to the beam (3) by means of fasteners, particularly nuts and bolts, which are positioned approximately perpendicular to the principal direction of the beam (3).

2. The panel as claimed in claim 1, **characterized in that** it comprises at least one beam (3), the two longitudinal end portions of which each have a slot (15) emerging in the end face of the corresponding longitudinal end portion, said slots being located at the respective places suitable for mounting two retainers (6) directly on these end portions, on two opposed sides of the panel.

3. The panel as claimed in claim 1 or claim 2, **characterized in that** said beam (3) extends in a single piece between said opposed sides of the panel.

4. The panel as claimed in one of claims 1 to 3, **characterized in that** it comprises at least one longeron (4).

5. The panel as claimed in one of claims 1 to 4, **characterized in that** it comprises several beams (3), the number of which enables all of the retainers (6) that the panel comprises to be mounted.

6. The panel as claimed in one of claims 1 to 5, **characterized in that** said beam (3) has a greater width and/or a greater thickness, and/or has walls of greater thickness, in said end portion intended to accommodate a retainer (6), so as to have greater strength.

7. The panel as claimed in one of claims 1 to 6, **characterized in that** the beam (3) has, between a central portion of this beam (3) and said end portion, an intermediate portion in which the width and/or the thickness of the beam (3) progressively increase/increases and/or in which the thickness of the walls of the beam (3) is increased relative to the thickness of the walls of this beam (3) in said central portion.

8. The panel as claimed in claim 6 and claim 7, **characterized in that** the beam (3) progressively widens in said intermediate portion in such a way that it thus has a shape flared toward its end portion.

9. The panel as claimed in one of claims 1 to 8, **characterized in that** the beam (3) is made of a molded material, especially of composite material comprising plies of fibers embedded in a resin.

10. The panel as claimed in claim 9, **characterized in that** the beam (3) comprises, in said intermediate portion, stitching joining the fiber plies to one another.

11. The panel as claimed in claim 9 or claim 10, **characterized in that** the number of plies is increased in said end portion.

12. The panel as claimed in one of claims 9 to 11, **characterized in that** at least one longeron (4) is made in several portions, said portions of said longeron (4) being formed from plies stitched to the plies intended to form the beams (3), and are molded with these beams (3), in such a way that they are perfectly integral with the latter.

13. The panel as claimed in one of claims 1 to 12, **characterized in that** the beam (3) comprises:
- two longitudinal section members (10) having a C-shaped cross section, intermediate portions (10b) of which are slightly angled on that side of the section member (10) along which the upper and lower branches of the "C" formed by the cross section of this section member extend, these section members (10) being placed back-to-back in such a way that they give the beam (3) an I-shaped cross section and that their intermediate portions (10b) and their end portions (10c) define elongate spaces between them; and
- inserts (11), which are placed between these section members (10), in said elongate spaces.

## Patentansprüche

1. Flugzeug-Öffnungsplatte, insbesondere Flugzeug-Kabinentür (1), die entlang ihrer seitlichen Seiten mehrere Halter (6) umfasst, wobei diese dafür vorgesehen sind, in der Verschluss-Stellung der Platte mit entsprechenden Haltern ineinanderzugreifen, die an der Rahmenstruktur dieser Platte angeordnet sind, wobei die Platte wenigstens einen Querbalken (3) umfasst, der an einer geeigneten Position zum Anbringen eines Halters (6) unmittelbar an dem Querbalken (3) angeordnet ist, und jeder Halter (6) einen Halteteil (7) und einen Anbringungsteil (8), der durch eine Basis gebildet wird, umfasst:
**dadurch gekennzeichnet, dass**:
ein Längsendabschnitt des Querbalkens (3) einen Schlitz (15) hat, der in der Stirnfläche desselben hervortritt,
der Anbringungsteil (8) einen Körper mit dem Halteteil (7) bildet,
der Anbringungsteil (8) und der Schlitz (15) auf eine solche Weise geformt sind, dass der Anbringungsteil (8) stramm in den Schlitz (15) eingreift, um so zu ermöglichen, dass die durch den Anschlag erfahrenen Kräfte unmittelbar in den Kern des Querbalkens übertragen werden, und
der Anbringungsteil mit Hilfe von Befestigungselementen, insbesondere Muttern und Bolzen, die annähernd senkrecht zu der Hauptrichtung des Querbalkens (3) angeordnet sind, an dem Querbalken (3) befestigt ist.

2. Platte nach Anspruch 1, **dadurch gekennzeichnet, dass** sie wenigstens einen Querbalken (3) umfasst, dessen zwei Längsendabschnitte jeweils einen Schlitz (15) haben, der in der Stirnfläche des entsprechenden Längsendabschnitts hervortritt, wobei die Schlitze an den jeweiligen Stellen angeordnet sind, die zum Anbringen von zwei Haltern (6) unmittelbar an diesen Endabschnitten, auf zwei gegenüberliegenden Seiten der Platte, geeignet sind.

3. Platte nach Anspruch 1 oder Anspruch 2, **dadurch gekennzeichnet, dass** sich der Querbalken (3) in einem einzigen Stück zwischen den gegenüberliegenden Seiten der Platte erstreckt.

4. Platte nach einem der Ansprüche 1 bis 3, **dadurch gekennzeichnet, dass** sie wenigstens einen Längsholm (4) umfasst.

5. Platte nach einem der Ansprüche 1 bis 4, **dadurch gekennzeichnet, dass** sie mehrere Querbalken (3) umfasst, deren Anzahl es ermöglicht, dass alle der Halter (6), welche die Platte umfasst, angebracht werden.

6. Platte nach einem der Ansprüche 1 bis 5, **dadurch gekennzeichnet, dass** der Querbalken (3) in dem Endabschnitt, der dafür vorgesehen ist, einen Halter (6) aufzunehmen, eine größere Breite und/oder eine größere Dicke hat und/oder Wände mit einer größeren Dicke hat, um so eine größere Festigkeit zu haben.

7. Platte nach einem der Ansprüche 1 bis 6, **dadurch gekennzeichnet, dass** der Querbalken (3), zwischen einem Mittelabschnitt dieses Querbalkens (3) und dem Endabschnitt, einen Zwischenabschnitt hat, in dem sich die Breite und/oder die Dicke des Querbalkens (3) zunehmend steigern/steigert und/oder in dem die Dicke der Wände des Querbalkens (3) im Verhältnis zu der Dicke der Wände dieses Querbalkens (3) in dem Mittelabschnitt gesteigert ist.

8. Platte nach Anspruch 6 und Anspruch 7, **dadurch gekennzeichnet, dass** sich der Querbalken (3) in dem Zwischenabschnitt auf eine solche Weise zunehmend verbreitert, dass er folglich eine zu seinem Endabschnitt hin aufgeweitete Form hat.

9. Platte nach einem der Ansprüche 1 bis 8, **dadurch gekennzeichnet, dass** der Querbalken (3) aus einem geformten Werkstoff, insbesondere aus Verbundwerkstoff, der Lagen aus Fasern, eingebettet in einem Harz, umfasst, hergestellt ist.

10. Platte nach Anspruch 9, **dadurch gekennzeichnet, dass** der Querbalken (3) in dem Zwischenabschnitt eine Heftung umfasst, welche die Faserlagen miteinander verbindet.

11. Platte nach Anspruch 9 oder Anspruch 10, **dadurch gekennzeichnet, dass** die Anzahl von Lagen in dem Endabschnitt gesteigert ist.

12. Platte nach einem der Ansprüche 9 bis 11, **dadurch gekennzeichnet, dass** der wenigstens eine Längsholm (4) in mehreren Abschnitten hergestellt ist, wobei die Abschnitte des Längsholmes (4) aus Lagen geformt sind, die an die Lagen geheftet sind, die dafür vorgesehen sind, die Querbalken (3) zu bilden, und auf eine solche Weise mit diesen Querbalken (3) geformt sind, dass sie mit denselben vollkommen integriert sind.

13. Platte nach einem der Ansprüche 1 bis 12, **dadurch gekennzeichnet, dass** der Querbalken (3) Folgendes umfasst:
zwei Längs-Sektionselemente (10), die einen C-förmigen Querschnitt haben, wobei Zwischenabschnitte (10b) derselben auf derjenigen Seite des Sektionselementes (10) geringfügig abgewinkelt sind, entlang derer sich der obere und der untere Zweig des durch den Querschnitt dieses Sektionselementes gebildeten "C" erstrecken, wobei diese Sektionselemente (10) auf eine solche Weise Rücken an Rücken angeordnet sind, dass sie dem Querbalken (3) einen I-förmigen Querschnitt geben und dass ihre Zwischenabschnitte (10b) und ihre Endabschnitte (10c) längliche Räume zwischen sich definieren, und
Einsätze (11), die zwischen diesen Sektionselementen (10), in den länglichen Räumen, angeordnet sind.

## Revendications

1. Trappe pour avion, en particulier porte de cabine d'avion (1), comprenant une pluralité d'éléments de retenue (6) le long de ses côtés latéraux, ceux-ci étant destinés à s'engager, dans la position de fermeture de la trappe, avec des éléments de retenue correspondants qui sont situés sur la structure de cadre de cette trappe; la trappe comprenant au moins un renfort (3), situé à une position appropriée pour monter un élément de retenue (6) directement sur ce renfort (3), et chaque élément de retenue (6) comprenant une partie de retenue (7) et une partie de montage (8) formée par une base;
**caractérisée en ce que**:
une partie d'extrémité longitudinale dudit renfort (3) comporte une fente (15) qui émerge dans la face d'extrémité de celle-ci;
ladite partie de montage (8) formant un seul corps avec ladite partie de retenue (7);
ladite partie de montage (8) et ladite fente (15) étant configurées de telle sorte que la partie de montage (8) s'engage étroitement dans ladite fente (15) de manière à permettre que les forces subies par l'arrêt soient directement transférées dans l'âme du renfort; et
ladite partie de montage est attachée au renfort (3) au moyen d'éléments de fixation, en particulier des écrous et des boulons, qui sont positionnés approximativement perpendiculairement à la direction principale du renfort (3).

2. Trappe selon la revendication 1, **caractérisée en ce qu'**elle comprend au moins un renfort (3), dont les deux parties d'extrémité longitudinale présentent chacune une fente (15) qui émerge dans la face d'extrémité de la partie d'extrémité longitudinale correspondante, lesdites fentes étant situées aux positions respectives appropriées pour monter deux éléments de retenue (6) directement sur ces parties d'extrémité, sur deux côtés opposés de la trappe.

3. Trappe selon la revendication 1 ou la revendication 2, **caractérisée en ce que** ledit renfort (3) s'étend en un seul tenant entre lesdits côtés opposés de la trappe.

4. Trappe selon l'une quelconque des revendications 1 à 3, **caractérisée en ce qu'**elle comprend au moins un longeron (4).

5. Trappe selon l'une quelconque des revendications 1 à 4, **caractérisée en ce qu'**elle comprend plusieurs renforts (3) dont le nombre permet de monter tous les éléments de retenue (6) que la trappe comporte.

6. Trappe selon l'une quelconque des revendications 1 à 5, **caractérisée en ce que** ledit renfort (3) présente une plus grande largeur et/ou une plus grande épaisseur, et/ou comprend des parois de plus grande épaisseur, dans ladite partie d'extrémité destinée à recevoir un élément de retenue (6), de manière à afficher une plus grande résistance.

7. Trappe selon l'une quelconque des revendications 1 à 6, **caractérisée en ce que** le renfort (3) présente, entre une partie centrale de ce renfort (3) et ladite partie d'extrémité, une partie intermédiaire dans laquelle la largeur et/ou l'épaisseur du renfort (3) augmente/diminue progressivement, et/ou dans laquelle l'épaisseur des parois du renfort (3) est augmentée par rapport à l'épaisseur des parois de ce renfort (3) dans ladite partie centrale.

8. Trappe selon la revendication 6 et la revendication 7, **caractérisée en ce que** le renfort (3) s'élargit progressivement dans ladite partie intermédiaire de telle sorte qu'elle présente ainsi une forme évasée en direction de sa partie d'extrémité.

9. Trappe selon l'une quelconque des revendications 1 à 8, **caractérisée en ce que** le renfort (3) est constitué d'un matériau moulé, en particulier d'un matériau composite comprenant des couches de fibres incorporées dans une résine.

10. Trappe selon la revendication 9, **caractérisée en ce que** le renfort (3) comprend, dans ladite partie intermédiaire, une piqûre qui joint les couches de fibres les unes aux autres.

11. Trappe selon la revendication 9 ou la revendication 10, **caractérisée en ce que** le nombre de couches est accru dans ladite partie d'extrémité.

12. Trappe selon l'une quelconque des revendications 9 à 11, **caractérisée en ce qu'**au moins un longeron (4) est constitué de plusieurs parties, lesdites parties dudit longeron (4) étant formées à partir de couches piquées sur les couches destinées à former les renforts (3), et étant moulées avec ces renforts (3) de telle sorte qu'elles soient parfaitement intégrées avec ces derniers.

13. Trappe selon l'une quelconque des revendications 1 à 12, **caractérisée en ce que** le renfort (3) comprend:
deux éléments de profilé longitudinaux (10) présentant une section transversale en forme de C, dont des parties intermédiaires (10b) sont légèrement inclinées sur ce côté de l'élément de profilé (10) le long duquel les branches supérieure et inférieure du "C" formé par la section transversale de cet élément de profilé s'étendent, ces éléments de profilé (10) étant placés dos à dos de telle sorte qu'ils donnent au renfort (3) une section transversale en forme de I, et **en ce que** leurs parties intermédiaires (10b) et leurs parties d'extrémité (10c) définissent des espaces allongés entre ceux-ci; et
des inserts (11) qui sont placés entre ces éléments de profilé (10) dans lesdits espaces allongés.
